# EUROPÄISCHE PATENTSCHRIFT

(11) **EP 1 900 577 B1**
(45) Veröffentlichungstag und Bekanntmachung des Hinweises auf die Patenterteilung: **01.04.2009**
(21) Anmeldenummer: 07101577.0
(22) Anmeldetag: 01.02.2007
(51) Int. Cl.: B60R 21/13

(54) **Überrollschutzsystem für Kraftfahrzeuge mit einem aktiv aufstellbaren, einen Verschleißschutz aufweisenden Überrollbügel**
Roll over protection for vehicles with an aktive deployable roll bar having wearing protection
Dispositif d'arceau pour véhicule a deploiement automatique avec un arceau de sécurité avec résistant à l'usure

(30) Priorität: 14.02.2006 DE 102006006658
(43) Veröffentlichungstag der Anmeldung: 19.03.2008
(73) Patentinhaber: ISE Automotive GmbH, 51702 Bergneustadt (DE)
(72) Erfinder: Zupancic, Manuela, 51702 Bergneustadt (DE); Röhner, Stephan, 44287 Dortmund (DE); Naß, Michael, 51702 Bergneustadt (DE)
(74) Vertreter: Fuchs

(56) Entgegenhaltungen:
- EP-A- 1 510 412
- EP-A- 1 652 736
- EP-A1- 0 788 932
- EP-A1- 0 952 042
- EP-A2- 0 233 777
- DE-A1- 19 540 819
- DE-B3- 10 344 446
- DE-C1- 10 040 642
- DE-C1- 10 044 930
- DE-U1-9202006 003 64

## Beschreibung

Die Erfindung bezieht sich auf ein Überrollschutzsystem für Kraftfahrzeuge mit einem aktiv aufstellbaren Überrollbügel, der in einer fahrzeugfesten Halterung lageveränderlich aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte aufgestellte, stützende Stellung bringbar ist, und der kopfseitig einen Verschleißschutz aufweist.

Derartige Überrollschutzsysteme dienen zum Schutz der Insassen in Kraftfahrzeugen ohne schützendes, massives Dach, typischerweise in Cabriolets oder Sportwagen, indem sie bei einem Überschlag einen Überlebensraum für die Insassen aufspannen.

Es ist dabei bekannt, einen die gesamte Fahrzeugbreite überspannenden, fest installierten Überrollbügel vorzusehen (EP 0 233 777) oder jedem Fahrzeugsitz einen höhenunveränderlich fest installierten Überrollbügel (DE 196 04 423) zuzuordnen. Neben diesen sogenannten starren Überrollbügeln sind auch weit verbreitet konstruktive Lösungen für sogenannte aktive Überrollbügelsysteme im Markt, bei denen der Überrollbügel im Normalzustand abgelegt ist, und im Gefahrenfall, also bei einem drohenden Überschlag, sensorgesteuert mittels eines Energiespeichers schnell in eine schützende verriegelte Position aufgestellt wird, um zu verhindern, dass die Fahrzeuginsassen durch das sich überschlagende Fahrzeug erdrückt werden.

Diese sogenannten "aktiven" Überrollschutzsysteme weisen typischerweise für jeden Sitz einen in einem fahrzeugfesten Kassetten-Gehäuse mit seinen Bügelschenkeln meist linear geführten U-förmigen Überrollbügel auf. Eine derartige Kassetten-Konstruktion eines Überrollbügelschutzsystems mit linear aufstellendem Überrollbügel zeigt beispielsweise die DE 100 40 642 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Ein derartiges System weist eine zwischen Fond und Gepäckraum angebrachte Rahmenkonstruktion für die Aufnahme der aktiven Überrollbügelsysteme auf.

Sowohl die Kassetten-Konstruktionen als auch die Querträger-Konstruktionen sind in vielfältigen Ausführungsformen, angepasst an den jeweiligen Fahrzeugtyp, auf dem Markt eingeführt und in Betrieb.

Es sind jedoch auch Überrollschutzsysteme mit einem annähernd die gesamte Fahrzeugbreite überspannenden, aktiv aufstellbaren Überrollbügel bekannt. Dabei kann der Bügelkopf als durchgehende Bügelschale ausgebildet sein (DE 195 40 819 A1), oder kann im Bereich der Fahrzeugsitze bügelkopfartige Ausformungen aufweisen (DE 100 44 930 C1). Ferner kann der Überrollbügel drehbar gelagert und im Gefahrenfall durch Hochschwenken in die Stützposition gebracht werden, oder er kann mit seinen Bügelschenkeln linear aufstellbar gelagert sein.

Von einem aktiv aufstellbaren Überrollbügel nach einem der vorbeschriebenen Varianten geht die Erfindung aus.

Es ist dabei auch bekannt, den Überrollbügel kopfseitig, d.h. in dem Bereich, auf dem das überschlagene Kraftfahrzeug gleitet, mit einem sogenannten Verschleißschutz zu versehen. Die gattungsgemäßeEP 0 952 042 B1 zeigt verschiedene Möglichkeiten zur konstruktiven Realisierung des Verschleißschutzes in Form von Abriebzonen bzw. Einsätzen.

Aus Gründen eines sportlichen, schnittigen Designs sind moderne Cabriofahrzeuge bzw. auch Sportwagen nach Art eines Coupe-Fahrzeuges im Übergang vom abnehmbarem oder versenkbarem Dach zur Kofferraumhaube sehr flach ausgebildet. Die Überrollschutzsysteme in diesen Fahrzeugen haben bei geschlossenem Dach nur eine eingeschränkte Schutzwirkung dadurch, dass der Überrollbügel nur einen sehr begrenzten Aufstell-Hub fahren kann, weil er vom Dach bzw. von der Heckscheibe gestoppt wird. Diese Begrenzung ist bei modernen, schnittigen Fahrzeugen relativ groß. Dadurch ist die sogenannte Überrolltangente, die den Überlebensraum für die Wageninsassen darstellt, sehr niedrig. Bei einem Überschlag wird der Abstand zwischen den Köpfen und dem Dach sehr gering!

Es ist daher durch die EP 1 510 412 A1 bekannt geworden, bei U-förmigen, aus einem Bügelkopf und zwei Bügelschenkeln bestehenden Überrollbügeln, im Bügelkopf zwei glasbrechende Dorne aus einem Hartmetall, z.B. Wolframkarbid, zu befestigen, die beim Aufstellen des Bügels in der Lage sind, das Heckfenster zu zertrümmern und dem Überrollbügel die Möglichkeit des kompletten Aufstellens zu ermöglichen.
Bei der einen Variante sind die Dorne in dem Bügelkopf eingeschraubt und sind ständig sichtbar. Bei einer zweiten Variante sind sie versenkt im Überrollkopf in pyrotechnischen Einheiten, die im Fall eines Überschlages gezündet werden und die Dorne dabei ausstoßen, integriert.
Die bekannte Lösung ist sehr aufwändig und benötigt teure Zusatzeinrichtungen. Ferner wird die Festigkeit des Bügelkopfes durch die in ihm angebrachten Bohrungen nachhaltig beeinträchtigt.

Der Erfindung liegt daher die Aufgabe zugrunde, das eingangs bezeichnete Überrollschutzsystem hinsichtlich der vorgenannten Problematik so auszubilden, dass es mit einfachen Mitteln und ohne Beeinträchtigung der Festigkeit des Überrollbügels in der Lage ist, ein Heckfenster durch seine Aufstellbewegung zu zertrümmern und damit dem Überrollbügel die Möglichkeit des Ausfahrens mit maximalem Aufstellhub zu geben.

Die Lösung dieser Aufgabe gelingt bei einem Überrollschutzsystem für Kraftfahrzeuge mit einem aktiv aufstellbaren Überrollbügel, der in einer fahrzeugfesten Halterung lageveränderlich aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte aufgestellte, stützende Stellung bringbar ist, gemäß der Erfindung dadurch, dass der Verschleißschutz glasbrechend ausgebildet ist.

Durch die erfindungsgemäße Maßnahme wird auf einfache Weise eine Möglichkeit geschaffen, mittels des ohnehin vorhandenen Verschleißschutzes dem Überrollbügel eine glasbrechende Eigenschaft zu verleihen, ohne dass dabei die mechanische Festigkeit des Überrollbügels beeinträchtigt wird.

Entsprechende Ausgestaltungen und Weiterbildungen der Erfindung sind in Unteransprüchen gekennzeichnet und ergeben sich auch aus der folgenden Figurenbeschreibung.

Anhand von in den Patentzeichnungen in verschiedenen Ansichten und Zuständen dargestellten vorteilhaften Ausführungsbeispielen wird die Erfindung näher erläutert.

Es zeigen:
- Fig. 1: in einer schematisierten Frontansicht ein Überrollschutzsystem für ein Kraftfahrzeug mit einem Überrollkörper, der durch ein Profilteil gebildet ist, und kopfseitig einen Verschleißschutz in Form eines Querbalkens mit glasbrechender Kante besitzt,
- Fig. 2: in einer querschnittlichen Ausschnitt-Darstellung den Bügelkopf nach Fig. 1 mit seinem Verschleißschutz und der glasbrechenden Kante in deren Einwirkung auf die Heckscheibe des Fahrzeuges,
- Fig. 3: eine zweite Ausführungsform des Überrollschutzsystems einen Überrollkörper, gebildet aus zwei faserverstärkten Kunststoff-Halbschalen mit einem Verschleißschutz in Form einer metallischen Einlage mit glasbrechender Komponente,
- Fig. 4: in einer querschnittlichen Ausschnitt-Darstellung den Überrollkopf des Überrollkörpers nach Fig. 3, und
- Fig. 5: in sechs Figurenteilen A - F verschiedene Varianten für einen Verschleißschutz mit integrierter glasbrechender Komponente.

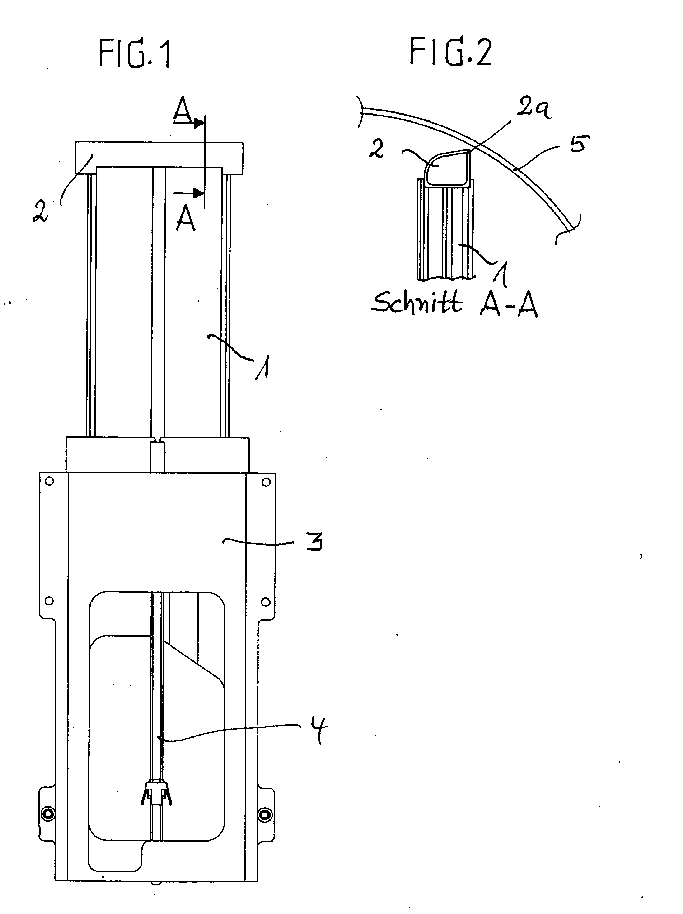

Die Fig. 1 mit der querschnittlichen Ausschnitt-Darstellung nach Fig. 2 zeigt eine erste Ausführungsform eines Überrollkörpers, der in bekannter Weise aus einem Profilkörper 1 mit einer kopfseitig angebrachten Traverse 2 als Verschleißschutz besteht, wobei in Fig. 2 der aufgestellte Zustand des Überrollkörpers dargestellt ist.

Der den Überrollbügel bildende Profilkörper 1 ist in bekannter Weise in einer fahrzeugfest angebrachten Kassette 3 geführt gehaltert, die einen zentralen Führungsstab 4 für die (nicht dargestellte) Antriebs-Druckfeder zeigt. Auch die anderen üblichen Komponenten eines Überrollschutzsystems, wie Haltevorrichtung und Verriegelungseinrichtung, sind, weil an sich bekannt und im vorliegenden Fall ohne Relevanz zur Erfindung, der Einfachheit halber nicht dargestellt.
In den Figuren 1 und 2 ist dabei der Bügelkopf mit dem durch die Traverse 2 gebildeten Verschleißschutz ohne die übliche Umschäumung dargestellt.

Die Traverse 2 wird vorzugsweise durch einen Querbalken in Form eines deformierbaren Profilkörpers gebildet. Wie dabei die Fig. 2 zeigt, besitzt dieser Profilkörper eine scharfe Kante 2 a, die als glasbrechende Komponente wirkt. Schnellt nämlich der Überrollbügel nach Auslösung durch einen Überschlagsensor mit hoher Kraft nach oben, trifft die Kante 2 a, wie in Fig. 2 dargestellt, auf die symbolisch dargestellte Heckscheibe 5 und zertrümmert diese, so dass sich der Überrollbügel um seinen maximalen Hub aufstellen kann.

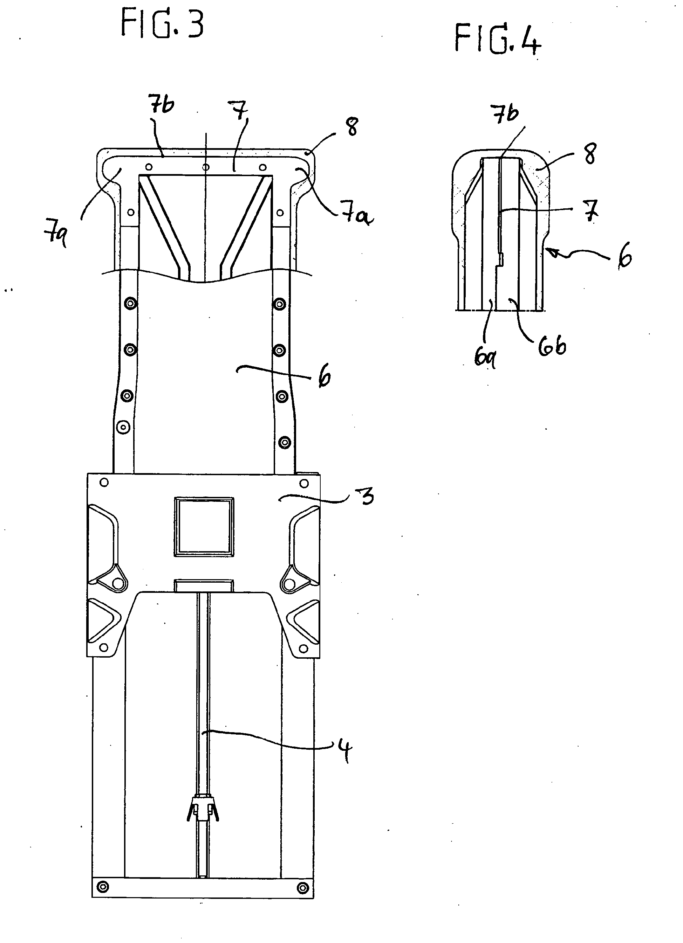

In Fig. 3 mit der querschnittlichen Ausschnitt-Darstellung nach Fig. 4 ist eine zweite Ausführungsform der Erfindung dargestellt. Bei dieser Ausführungsform ist der Überrollkörper nicht durch einen metallischen Profilkörper, sondern durch einen zweischaligen Kunststoffbügel 6 gebildet, wie er beispielsweise durch die eingangs zitierte EP 0 952 042 B1 an sich bekannt ist. Als Verschleißschutz dient eine im Kopf integrierte schmale Hartmetalleinlage 7 mit seitlich abstehenden Rundungen 7 a und einer oberen Kante 7 b zum Brechen des Glases der Heckscheibe. Wie die Fig. 4 dabei zeigt, ist die Hartmetalleinlage 7 zwischen den Schalen 6 a, 6 b des Kunststoffbügels 6 eingebettet. Der Kopf des Kunststoffbügels 6 einschließlich der Hartmetalleinlage 7 ist dabei von einer Umschäumung 8 umgeben.

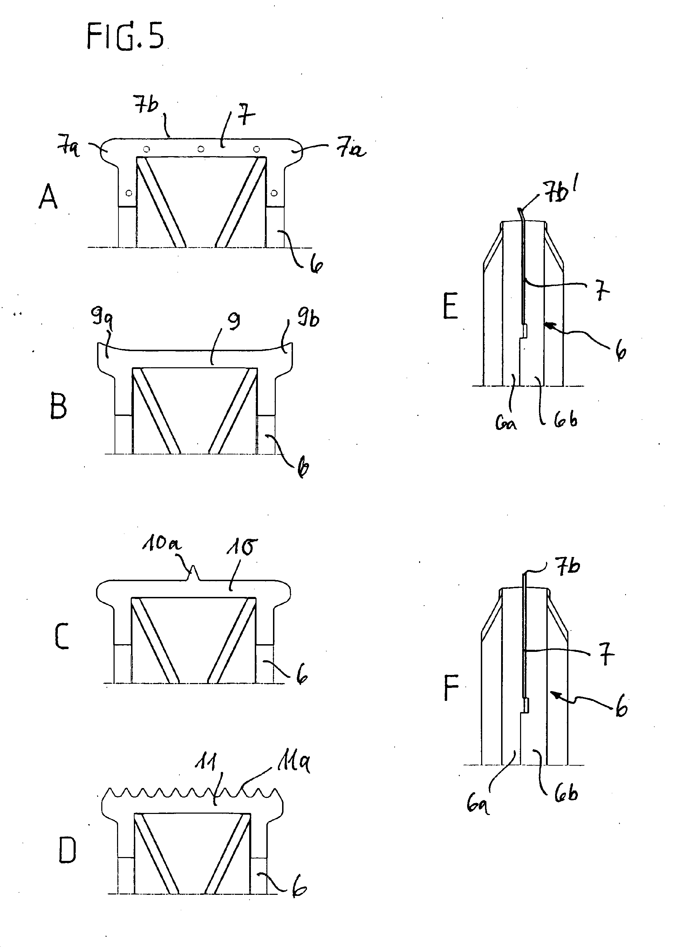

Die Fig. 5 zeigt in sechs Figurenteilen A - F verschiedene Ausführungsformen eines zweischaligen Kunststoff-Überrollbügels mit einem Verschleißschutz, in welchem jeweils eine glasbrechende Komponente in Form einer Metalleinlage unterschiedlicher Konfiguration integriert ist.
Die Umschäumung ist jeweils aus Gründen der Übersichtlichkeit nicht dargestellt.

Die Ausführungsform nach dem Figurenteil A entspricht derjenigen nach Fig. 3.

Bei der im Figurenteil B dargestellten Ausführung ist eine metallische Einlage 9 mit an den Schmalseiten hörnerartig hochgezogenen Kanten 9 a, 9 b als glasbrechende Komponenten vorgesehen.

Bei der Ausführung nach Fig. 5C entspricht die Basiskonfiguration der metallischen Einlage 10 derjenigen des Figurenteils A. Als glasbrechende Komponente ist jedoch mittig ein dornartiger Fortsatz 10 a angeformt.

Bei der Ausführung nach Fig. 5D ist eine metallische Einlage 11 mit einer zahnartig geriffelten oberen Kante 11 a als glasbrechende Komponente vorgesehen.

Die querschnittliche Ansicht des Bügelkopfes und des Verschleißschutzes mit integrierter glasbrechender Komponente nach Figurenteil F zeigt eine Ausführung mit einer metallischen Einlage 7, deren obere Kante 7 b im Gegensatz zu der Ausführung nach der entsprechenden Fig. 4 über den Kopf der beiden Bügelschalen 6 a, 6 b hinausragt, damit die obere Kante 7 b unmittelbar unter der oberen Begrenzung der Umschäumung (nicht dargestellt) liegt und direkt als glasbrechende Komponente wirken kann.

Bei der Ausführungsform nach dem Figurenteil E ist die überstehende Kante 7' in Richtung der Heckscheibe abgewinkelt, um so die glasbrechende Wirkung zu erhöhen.

Neben den dargestellten Ausführungsformen sind weitere Möglichkeiten eines glasbrechenden Verschleißschutzes denkbar, wobei die nachstehenden generellen Bedingungen zu berücksichtigen sind.
Allen Ausführungsformen gemein ist die Schaffung mindestens einer markanten Kante oder Ecke, die in der Lage ist, beim schlagartigen Aufstellen des Bügels die Scheibe punktuell derart zu treffen, dass die gesamte Scheibe bricht oder zerbröselt und damit dem Überrollbügel den Weg für eine maximale Aufstellung frei gibt.
Der Verschleißschutz selbst besteht aus einer vorzugsweise ebenen Metallplatte, die scheibenseitig so gestaltet ist, dass für den vorliegenden Einsatzzweck die Glasbrecherkante in Größe, Form, Werkstoff und Lage so gestaltet werden kann, dass eine zuverlässige glasbrechende Funktion gewährleistet ist.

Der Verschleißschutz besteht aus einem Material, welches in seiner Grundfestigkeit bereits höher anzusehen ist als das zu schützende Basismaterial des Bügelkopfes.
Zudem besteht die Möglichkeit, den Verschleißschutz zu härten, insbesondere seine integrierte glasbrechende Komponente. Der Verschleißschutz soll so aufgebaut werden, dass seine glasbrechende Komponente den oberen Abschluß des Bügelkopfes bildet und bündig mit der Kontur abschließt oder ein gewisses Maß über die Bügelkontur hervorsteht.

Bei Bügelköpfen, die im Fahrzeug permanent sichtbar sind und die deshalb mit einem Schaum gepolstert sind, ist es zweckmäßig, den Verschleißschutz zumindest partiell bis kurz unter die Schaumhaut aufzubauen, damit dieser einerseits optisch nicht sichtbar ist aber den gewünschten Vorteil des Glasbrechens bietet. Der Verschleißschutz ist üblicherweise am oder im Bügelkopf angebracht, z.B. in Form eines traversenähnlichen metallischen Querbalkens bei Profilbügeln. Da moderne Überrollbügel aus Leichtbaumaterialien wie Aluminium usw. gebildet sind, lässt sich hier ein solcher Schutz gut integrieren.

Bei Überrollbügeln aus glasfaser- oder kohlenfaserverstärkten Kunststoffen befindet sich am Bügelkopf ein Verschleißschutz, vorzugsweise aus einem metallischen Werkstoff.

Bei Kunststoffbügeln, die, wie im Fall der Figuren 3-5, zweischalig aufgebaut sind, lässt sich der Verschleißschutz in Form einer metallischen Platte zwischen die beiden Schalenhälften positionieren, z.B. als Einlegeteil vor dem Pressprozess oder beim Zusammenbau der beiden Schalenteile. Die metallische Platte ist dabei vorzugsweise ein Stanzteil.

### Bezugszeichenliste

- 1: Überroll-Profilkörper
- 2: Traverse
- 2 a: scharfe Kante
- 3: Kassette
- 4: Feder-Führungsstab
- 5: Heckscheibe
- 6: zweischaliger Kunststoffbügel
- 6 a, 6 b: Bügelschalen
- 7: Hartmetalleinlage
- 7 a: seitliche Rundungen
- 7 b: obere Kante
- 7 b': abgewinkelte obere Kante
- 8: Umschäumung
- 9: metallische, hörnerartige Einlage
- 9 a, b: hörnerartig hochgezogene Seitenkanten
- 10: metallische Einlage mit Dorn
- 10 a: dornartiger Fortsatz
- 11: metallische Einlage
- 11 a: zahnartig geriffelte Kante

## Patentansprüche

1. Überrollschutzsystem für Kraftfahrzeuge mit einem aktiv aufstellbaren Überrollbügel, der in einer fahrzeugfesten Halterung lageveränderlich aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte aufgestellte, stützende Stellung bringbar ist, und der kopfseitig einen Verschleißschutz aufweist, **dadurch gekennzeichnet, dass** der Verschleißschutz (2; 7; 9 -11) glasbrechend ausgebildet ist.

2. Überrollschutzsystem nach Anspruch 1, **dadurch gekennzeichnet, dass** in dem Verschleißschutz (2; 7; 9 - 11) an mindestens einer Position eine glasbrechende Komponente (2 a; 7 b; 9 a, b; 10 a; 11 a) integriert ist.

3. Überrollschutzsystem nach Anspruch 1 oder 2, mit einem Überrollbügel in Form eines metallischen Profilkörpers (1), der als Verschleißschutz kopfseitig einen traversenartigen Körper (2) mit integrierter glasbrechenden Kante (2 a) aufweist.

4. Überrollschutzsystem nach Anspruch 3, **dadurch gekennzeichnet, dass** der traversenartige, den Verschleißschutz bildende Körper (2) als Profilkörper ausgebildet ist.

5. Überrollschutzsystem nach Anspruch 1 oder 2, mit einem Überrollbügel in Form eines Kunststoffbügels (6) aus faserverstärktem Kunststoff, der als Verschleißschutz kopfseitig eine Metalleinlage (7, 9 - 11) mit integrierten glasbrechenden Kanten oder Ausformungen (7 b; 9 a, b; 10 a; 11 a) aufweist.

6. Überrollschutzsystem nach Anspruch 5, **dadurch gekennzeichnet, dass** die Metalleinlage ein flaches Werkstück ist, das im Kopf des Kunststoffbügels eingebettet ist.

7. Überrollschutzsystem nach Anspruch 5 oder 6, **dadurch gekennzeichnet, dass** der Kunststoffbügel (6) aus mindestens zwei Bügelschalen (6 a, b) zusammengesetzt ist.

8. Überrollschutzsystem nach einem der Ansprüche 5 bis 7, **dadurch gekennzeichnet, dass** die obere Kante (7 b) der Metalleinlage (7) als glasbrechende Komponente ausgebildet ist.

9. Überrollschutzsystem nach einem der Ansprüche 5 bis 7, **dadurch gekennzeichnet, dass** die obere Kante der Metalleinlage (9) an den beiden Schmalseiten hörnerartig unter Bildung der glasbrechenden Komponente nach oben ausgeformt ist.

10. Überrollschutzsystem nach einem der Ansprüche 5 bis 7, **dadurch gekennzeichnet, dass** die obere Kante der Metalleinlage (10) mittig einen glasbrechenden Domfortsatz (10 a) aufweist.

11. Überrollschutzsystem nach einem der Ansprüche 5 bis 7, **dadurch gekennzeichnet, dass** die obere Kante der Metalleinlage (11) als eine zahnartig geriffelte, glasbrechende Kante (11 a) ausgebildet ist.

12. Überrollschutzsystem nach einem der Ansprüche 1 bis 11, **dadurch gekennzeichnet, dass** der Verschleißschutz zusammen mit dem Bügelkopf mit einer geschäumten Umhüllung (8) versehen ist.

13. Überrollschutzsystem nach Anspruch 12, **dadurch gekennzeichnet, dass** die glasbrechende Komponente des Verschleißschutzes dicht unter der äußeren Schaumhaut positioniert ist.

14. Überrollschutzsystem nach einem der Ansprüche 2 bis 13, **dadurch gekennzeichnet, dass** die glasbrechende Komponente des Verschleißschutzes den oberen Abschluß des Bügelkopfes bildet und bündig mit der Kopfkontur abschließt oder ein gewisses Maß über die Bügelkontur hervorsteht.

15. Überrollschutzsystem nach Anspruch 14, **dadurch gekennzeichnet, dass** die überstehende glasbrechende Komponente (7 b') in Richtung der Heckscheibe (5) des Fahrzeuges abgewinkelt ist.

## Claims

1. A roll-over protection system for motor vehicles, comprising an actively deployable roll bar which is displaceably held in a mounting fixed to the vehicle and which, in the normal state, is holdable in a lower, retracted, rest position by a holding device, and is movable into a locked, raised, supporting position by an energy accumulator in a sensor-controlled manner upon release of the holding device, and which has wear protection at its top end, **characterised in that** the wear protection (2; 7; 9-11) is formed with a glass-breaking function.

2. A roll-over protection system according to claim 1, **characterised in that** a glass-breaking component (2a; 7b; 9a, b; 10a; 11a) is integrated into the wear protection (2; 7; 9-11) in at least one position.

3. A roll-over protection system according to claim 1 or 2, comprising a roll bar in the form of a metal profiled body (1) which, as wear protection, has at its top end a traverse-type member (2) with an integrated, glass-breaking edge (2a).

4. A roll-over protection system according to claim 3, **characterised in that** the traverse-type member (2) forming the wear protection is formed as a profiled body.

5. A roll-over protection system according to claim 1 or 2, comprising a roll bar in the form of a plastics bar (6) which is made of a fibre-reinforced plastics material and which, as wear protection, has at its top end a metal inlay (7, 9-11) with integrated, glass-breaking edges or formations (7b; 9a, b; 10a; 11a).

6. A roll-over protection system according to claim 5, **characterised in that** the metal inlay is a flat workpiece which is embedded in the top of the plastics bar.

7. A roll-over protection system according to claim 5 or 6, **characterised in that** the plastics bar (6) is assembled from at least two bar shells (6a, b).

8. A roll-over protection system according to any one of claims 5 to 7, **characterised in that** the upper edge (7b) of the metal inlay (7) is formed as a glass-breaking component.

9. A roll-over protection system according to any one of claims 5 to 7, **characterised in that** the upper edge of the metal inlay (9) is shaped upwards in the manner of horns on both narrow sides to form the glass-breaking component.

10. A roll-over protection system according to any one of claims 5 to 7, **characterised in that** the upper edge of the metal inlay (10) centrally has a glass-breaking pin-type projection (10a).

11. A roll-over protection system according to any one of claims 5 to 7, **characterised in that** the upper edge of the metal inlay (11) is formed as a serrated, glass-breaking edge (11a).

12. A roll-over protection system according to any one of claims 1 to 11, **characterised in that** the wear protection together with the bar head is provided with a foamed covering (8).

13. A roll-over protection system according to claim 12, **characterised in that** the glass-breaking component of the wear protection is tightly positioned under the outer foam skin.

14. A roll-over protection system according to any one of claims 2 to 13, **characterised in that** the glass-breaking component of the wear protection forms the upper boundary of the bar head and ends flush with the head contour or projects a particular amount beyond the bar contour.

15. A roll-over protection system according to claim 14, **characterised in that** the projecting, glass-breaking component (7b') is angled towards the rear window (5) of the vehicle.

## Revendications

1. Système de protection contre les tonneaux pour des véhicules automobiles avec un arceau de sécurité pouvant être mis en place activement, qui est logé en position variable dans un support fixé au véhicule, et peut être maintenu à l'état normal par un dispositif de retenue dans une position de repos inférieure, déposée ainsi qu'amené de manière commandée par capteur dans une position d'appui, redressée, verrouillée en desserrant le dispositif de retenue par un accumulateur d'énergie, et qui présente côté tête une protection contre l'usure, **caractérisé en ce que** la protection contre l'usure (2 ; 7 ; 9 - 11) est réalisée de manière à briser le verre.

2. Système de protection contre les tonneaux selon la revendication 1, **caractérisé en ce qu'**un composant brisant le verre (2a ; 7b ; 9a, b ; 10a ; 11a) est intégré dans la protection contre l'usure (2 ; 7 ; 9 - 11) à au moins une position.

3. Système de protection contre les tonneaux selon la revendication 1 ou 2, avec un arceau de sécurité en forme de corps profilé (1) métallique qui présente comme protection contre l'usure côté tête un corps (2) de type traverse avec une arête (2a) brisant le verre intégrée.

4. Système de protection contre les tonneaux selon la revendication 3, **caractérisé en ce que** le corps (2) formant la protection contre l'usure, de type traverse est réalisé comme un corps profilé.

5. Système de protection contre les tonneaux selon la revendication 1 ou 2, avec un arceau de sécurité en forme d'arceau en matière plastique (6) renforcée par des fibres qui présente comme protection contre l'usure côté tête une couche intermédiaire métallique (7, 9 - 11) avec des arêtes ou formations en relief (7b ; 9a, b ; 10a ; 11a) brisant le verre intégrées.

6. Système de protection contre les tonneaux selon la revendication 5, **caractérisé en ce que** la couche intermédiaire métallique est une pièce plane qui est encastrée dans la tête de l'arceau en matière plastique.

7. Système de protection contre les tonneaux selon la revendication 5 ou 6, **caractérisé en ce que** l'arceau de sécurité (6) est composé d'au moins deux coques d'arceau (6a, b).

8. Système de protection contre les tonneaux selon l'une quelconque des revendications 5 à 7, **caractérisé en ce que** l'arête (7b) supérieure de la couche intermédiaire métallique (7) est réalisée comme un composant brisant le verre.

9. Système de protection contre les tonneaux selon l'une quelconque des revendications 5 à 7, **caractérisé en ce que** l'arête supérieure de la couche intermédiaire métallique (9) est formée vers le haut sur les deux petits côtés de manière cornue en formant le composant brisant le verre.

10. Système de protection contre les tonneaux selon l'une quelconque des revendications 5 à 7, **caractérisé en ce que** l'arête supérieure de la couche intermédiaire métallique (10) présente au milieu un prolongement de goujon (10a) brisant le verre.

11. Système de protection contre les anneaux selon l'une quelconque des revendications 5 à 7, **caractérisé en ce que** l'arête supérieure de la couche intermédiaire métallique (11) est réalisée comme une arête (11a) brisant le verre, cannelée en denture.

12. Système de protection contre les tonneaux selon l'une quelconque des revendications 1 à 11, **caractérisé en ce que** la protection contre l'usure est pourvue conjointement avec la tête d'arceau d'une enveloppe (8) expansée.

13. Système de protection contre les tonneaux selon la revendication 12, **caractérisé en ce que** le composant brisant le verre de la protection contre l'usure est positionné juste sous la pellicule expansée extérieure.

14. Système de protection contre les tonneaux selon l'une quelconque des revendications 2 à 13, **caractérisé en ce que** le composant brisant le verre de la protection contre l'usure forme la terminaison supérieure de la tête de l'arceau et se termine en affleurement avec le contour de la tête ou une certaine mesure dépasse du contour de l'arceau.

15. Système de protection contre les tonneaux selon la revendication 14, **caractérisé en ce que** le composant (7b') brisant le verre, dépassant est coudé en direction de la lunette arrière (5) du véhicule.
